**Europäisches Patentamt**

**European Patent Office**

**Office européen des brevets**

(19)

(11) Numéro de publication : **0 176 408**
**B1**

(12) # FASCICULE DE BREVET EUROPÉEN

(45) Date de publication du fascicule du brevet :
**17.05.89**

(21) Numéro de dépôt : **85401716.7**

(22) Date de dépôt : **05.09.85**

(51) Int. Cl.⁴ : **G 01 V   1/40, E 21 B  47/00**

(54) **Procédé et dispositif de diagraphie pour l'inspection acoustique d'un sondage muni d'un tubage.**

(30) Priorité : **05.09.84 FR 8413673**

(43) Date de publication de la demande :
**02.04.86 Bulletin 86/14**

(45) Mention de la délivrance du brevet :
**17.05.89 Bulletin 89/20**

(84) Etats contractants désignés :
**AT DE FR GB IT NL**

(56) Documents cités :
**EP—A— 0 089 892**
**US—A— 3 175 639**

(73) Titulaire : **SOCIETE DE PROSPECTION ELECTRIQUE**
**SCHLUMBERGER**
**42, rue Saint-Dominique**
**F-75340 Paris Cedex 07 (FR)**
**FR IT**
**Schlumberger Limited**
**277 Park Avenue**
**New York, N.Y. 10017 (US)**
**DE GB NL AT**

(72) Inventeur : **Dumont, Alain Marcel Guy**
**140 Boulevard Vincent Auriol**
**F-75014 Paris (FR)**

(74) Mandataire : **Hagel, Francis** ˙
**Etudes et Productions Schlumberger A L'ATTENTION**
**DU SERVICE BREVETS 26, rue de la Cavée B.P. 202**
**F-92142 Clamart Cedex (FR)**

. Jouve, 18, rue St-Denis, 75001 Paris, France

**Description**

L'invention concerne un procédé et un dispositif pour l'inspection acoustique d'un sondage muni d'un tubage et traversant des formations terrestres. Elle concerne plus particulièrement un procédé et un dispositif, utilisant une technique d'impulsions acoustiques, pour former des signaux représentatifs respectivement d'une ou plusieurs informations relatives au tubage et aux matériaux qui l'environnent, tout en prenant en compte les effets dus à l'environnement. Les informations relatives au tubage et aux matériaux qui l'environnent incluent notamment la qualité de la liaison du ciment avec le tubage, son épaisseur et la rugosité de sa paroi intérieure.

D'une manière générale, lorsque la profondeur désirée d'un puits est atteinte, un tubage est placé dans le sondage, et du ciment est injecté dans l'espace annulaire formé par le tubage et la paroi du sondage afin d'éviter toute communication hydraulique entre les différentes couches géologiques. Pour déterminer l'éventuelle existence de telles communications nuisibles, des mesures sont effectuées à l'aide d'un outil de diagraphie pour déterminer la qualité de la liaison du ciment avec le tubage.

L'utilisation d'ondes acoustiques afin d'effectuer de telles mesures est connue depuis fort longtemps. La plupart de ces techniques reposent sur une mesure moyenne circulaire et/ou longitudinale, et par conséquent ne permettent pas l'identification de phénomènes ponctuels, tels que les voies longitudinales de communication hydraulique.

Parmi les techniques qui visent à améliorer la résolution verticale et radiale d'une telle mesure, celle décrite dans la demande de brevet français No. 78 20515 (No. de publication 2 400 613) paraît particulièrement intéressante. Elle consiste à envoyer une impulsion acoustique au niveau d'un secteur radial du tubage, cette impulsion étant constituée par des ondes acoustiques dont les fréquences sont choisies de façon à faire apparaître une résonance d'épaisseur entre la paroi extérieure et la paroi intérieure du tubage, à déterminer l'énergie dans un segment de réverbération du signal de réflexion, et à former un signal qui en est représentatif pour caractériser la qualité de la liaison du ciment derrière ledit secteur radial du tubage. Le segment de réverbération considéré est choisi de façon à être sensiblement représentatif des réverbérations acoustiques entre les parois du tubage. Un amortissement rapide de la résonance, autrement dit une énergie faible, indique la présence de ciment derrière le tubage, tandis qu'un amortissement lent, donc une énergie élevée, indique l'absence de ciment.

Un outil de diagraphie utilisant une telle technique est décrit dans une brochure commerciale de Schlumberger intitulée « Cement Evaluation Tool » et parue en juin 1983. La sonde de cet outil est centrée dans le tubage. Elle comporte huit transducteurs distribués helicoïdalement à 45°, de façon à obtenir une bonne couverture de la périphérie du tubage. Les impulsions acoustiques sont déclenchées séquentiellement. Les réceptions, séquentielles elles aussi, sont analysées et envoyées à la surface où elles sont traitées. En outre un neuvième transducteur, aussi appelé transducteur de référence, est orienté suivant l'axe du tubage vers une paroi réflectrice qui est plane et disposé à une distance fixe du transducteur de référence. A partir du signal de réflexion détecté par ce neuvième transducteur, l'on détermine le temps de propagation, à travers le fluide in situ, de l'onde acoustique dans l'intervalle de temps séparant son émission de sa réception, et l'on en déduit la vitesse de propagation de l'onde à travers le milieu en question. A partir de cette vitesse de propagation de l'onde, il est possible de déterminer, pour chacun des huit transducteurs, un rayon apparent du tubage. Ce rayon est particulière- ment intéressant à connaître, car il permet notamment de déceler une éventuelle déformation du tubage et de surveiller le centrage de la sonde dans le tubage de façon à fournir une indication de la validité et de la qualité des mesures enregistrées.

Les mesures effectuées avec un outil ont confirmé qu'il peut effectivement identifier certaines voies de communication hydraulique. Un exemple d'une telle identification se trouve dans la figure 5 du brevet français No. 80 20890 (No. de publication 2 491 123) qui décrit un procédé et un dispositif d'obtention d'un enregistrement de la qualité du ciment.

Cependant l'interprétation quantitative de ces mesures a soulevé des problèmes insoupçonnés, à savoir des divergences dans les mesures, sensibles notamment avec la profondeur à laquelle les mesures sont effectuées, avec le type de boue utilisé dans le sondage et avec le type de tubage analysé.

Les études et les expériences entreprises par la demanderesse ont montré qu'une grande partie de ces différences était attribuable à l'environnement dans lequel la mesure a lieu, à savoir la pression, la température et plus particulièrement la nature du fluide in situ; la plage de variation de ces paramètres peut être très étendue, à savoir des pressions allant de 100 bars à 1 400 bars, des températures comprises entre 20 °C et 170 °C, et une densité de la boue se situant entre 1 et 1,8.

De plus, il s'est avéré que les mesures dépendaient également, d'une manière non négligeable, de la géométrie propre au tubage analysé, et par conséquent de son diamètre et de son épaisseur.

L'outil connu mentionné ci-dessus ne permet pas de corriger les effets dus aux variations des paramètres évoqués précédemment.

L'objet de l'invention se rapporte donc à un procédé et à un dispositif pour l'inspection acoustique d'un sondage muni d'un tubage dans lesquels on élimine les effets néfastes discutés ci-dessus.

Selon un premier aspect de l'invention, un procédé pour l'inspection acoustique d'un sondage muni d'un tubage et traversant des formations terrestres, consistant à former un ou plusieurs signaux représentatifs respectivement d'une ou plusieurs informations relatives audit tubage et aux matériaux qui l'environnent, à partir d'un premier signal acoustique de réflexion obtenu suite à l'envoi, à travers le milieu en présence dans le tubage, d'une première impulsion acoustique dirigée, suivant une incidence sensiblement normale, vers un secteur de la paroi du tubage, consiste en outre à corriger le premier signal acoustique de réflexion à l'aide d'un second signal acoustique de réflexion obtenu suite à l'envoi, à travers le même milieu en présence, d'une seconde impulsion acoustique dirigée, suivant une incidence sensiblement normale, vers un réflecteur de référence dont les caractéristiques nominales sont sensiblement similaires à celles d'un secteur du tubage étudié.

D'une manière particulière, le procédé inclue les étapes suivantes :
— depuis une première zone baignant dans le fluide à l'intérieur du tubage :
on émet au moins une première impulsion dirigée vers la paroi intérieure du tubage ;
on y recueille un premier signal acoustique de réflexion correspondant ; et
— on extrait d'au moins une partie choisie dudit premier signal acoustique de réflexion, une première série de signaux relatifs audit tubage et aux matériaux qui l'environnent.

D'une façon avantageuse, l'étape de corriger le premier signal acoustique de réflexion à l'aide du second signal acoustique de réflexion inclue les étapes suivantes :
— depuis un second endroit proche du premier et baignant également dans le fluide présent à l'intérieur du tubage :
on émet une seconde impulsion acoustique, de même nature que la première et dirigée, suivant une incidence sensiblement normale, vers ledit réflecteur de référence, les deux faces de ce dernier baignant dans ledit fluide ;
on y recueille un second signal acoustique de réflexion correspondant ;
— on extrait d'au moins une partie choisie dudit second signal acoustique de réflexion, de même manière que pour le premier signal, une seconde série de signaux relatifs audit réflecteur de référence ;
— on combine la première série de signaux avec la deuxième série de signaux de manière à obtenir une première série de signaux corrigés ; et
— on forme, à partir de cette première série de signaux corrigés, un ou plusieurs signaux représentatifs respectivement d'une ou plusieurs informations relatives audit tubage et aux matériaux qui l'environnent.

Selon un mode préférentiel, les premier et second endroits sont sensiblement à la même distance du tubage et du réflecteur, respectivement.

Les caractéristiques du réflecteur incluent notamment les caractéristiques géométriques, telles que son épaisseur et sa courbure.

Quant aux informations relatives au tubage et aux matériaux qui l'environnent, elles incluent entre autres la qualité de la liaison du ciment avec le tubage, la rugosité de la paroi intérieure du tubage ainsi que son épaisseur.

Selon un autre aspect de l'invention, un dispositif pour l'inspection acoustique d'un sondage muni d'un tubage et traversant des formations terrestres, comprenant :
— une sonde adaptée à être déplacée dans le sondage et équipée d'au moins un transducteur acoustique de mesure capable d'émettre une première impulsion acoustique dirigée, suivant une incidence sensiblement normale, vers au moins un secteur de la paroi dudit tubage et de détecter un premier signal acoustique de réflexion ;
— des moyens pour former un ou plusieurs signaux représentatifs respectivement d'une ou plusieurs informations relatives audit tubage et aux matériaux qui l'environnent, à partir dudit premier signal acoustique de réflexion ; et par ailleurs
— un transducteur acoustique de référence capable d'émettre une seconde impulsion acoustique dirigée, suivant une incidence sensiblement normale, vers une surface réflectrice de référence et de détecter un second signal acoustique de réflexion, comprend en outre des moyens pour corriger ledit premier signal acoustique de réflexion à l'aide du second signal acoustique de réflexion, ladite surface réflectrice de référence étant formée par un réflecteur de référence dont les caractéristiques nominales sont sensiblement similaires à celles dudit tubage et dont les deux faces baignent dans le fluide présent à l'intérieur du tubage.

Dans un mode de réalisation préférentiel, la distance entre la face avant de chacun des transducteurs de mesure et la paroi extérieure du tubage est sensiblement égale à la distance entre la face avant du transducteur de référence et la face arrière dudit réflecteur de référence.

L'épaisseur et la courbure du réflecteur de référence sont de préférence sensiblement identiques à celle du tubage étudié.

De préférence, lesdits moyens pour corriger ledit premier signal acoustique de réflexion incluent des moyens pour faire le rapport d'une grandeur du signal, respectivement mesurée dans une ou plusieurs fenêtres d'un des deux signaux acoustiques de réflexion, à la même grandeur respectivement mesurée dans les fenêtres correspondantes de l'autre des deux signaux acoustiques de réflexion.

La grandeur mentionnée ci-dessus inclue notamment l'amplitude, l'énergie, la fréquence et la phase du signal.

D'autres caractéristiques et avantages de l'invention sont décrits dans la description suivante se rapportant aux dessins annexés dans lesquels :

EP 0 176 408 B1

la figure 1 est un schéma d'un dispositif pour l'étude de la qualité du ciment selon l'invention, le dispositif étant représenté en cours de fonctionnement dans un sondage ;

la figure 2 est une coupe longitudinale de la section du dispositif comprenant le transducteur de référence associé à un réflecteur de référence ;

la figure 3 est une coupe longitudinale partielle de la figure 2 ;

la figure 4 représente un signal acoustique de réflexion Si tel que détecté par le transducteur Ti ;

la figure 5 est un diagramme des étapes de traitement de signal effectuées par le calculateur ;

les figures 6 et 7 illustrent chacune un exemple de relation entre l'impédance acoustique $Z_c$ du ciment et respectivement l'énergie $W_2$ contenue dans un segment de réverbération du signal de réflexion et la résistance à la compression CS du ciment disposé derrière le tubage.

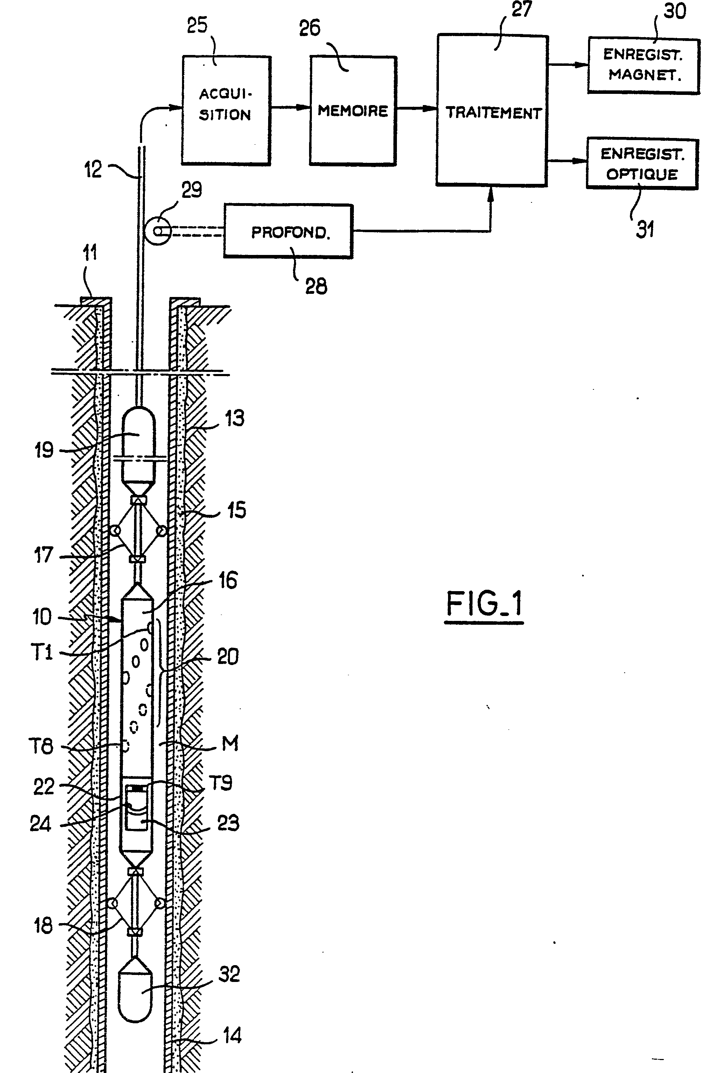

En référence à la figure 1, le dispositif de diagraphie acoustique pour l'étude de la qualité du ciment comprend un appareil de fond 10 suspendu dans un sondage 11 à l'extrémité d'un câble 12 multi-conducteurs et baignant dans un milieu environnant M. Le sondage qui traverse les formations 13 est muni d'un tubage 14. Du ciment 15 occupe l'espace annulaire délimité par le tubage et les formations étudiées. Ce dispositif de diagraphie comprend les caractéristiques de base de celui décrit dans le brevet français 78 20515, évoqué précédemment. D'une façon générale, l'appareil de fond 10 est un corps allongé qui comprend une sonde 16, des centreurs supérieur 17 et inférieur 18 destinés à maintenir la sonde 16 dans l'axe du tubage 14, une section de compensation acoustique 22, une section de compensation hydraulique 32 et une section électronique 19.

La sonde 16 est équipée de huit transducteurs acoustiques $T_1$ à $T_8$ (portant la référence générale 20) et disposés en hélice de façon à permettre l'investigation de huit secteurs de tubage régulièrement répartis sur sa périphérie. Dans le mode de réalisation de la figure 1, la position angulaire d'un transducteur se déduit de la précédente par une rotation de 45° autour de l'axe de la sonde. D'autres dispositions sont évidemment possibles avec des nombres différents de transducteurs et/ou des répartitions différentes tout autour de la sonde, sans sortir du cadre de l'invention.

Les centreurs 18 et 19 sont du type connu, dans lequel il est prévu des moyens (non représentés) permettant des liaisons électriques et/ou hydrauliques entre la partie supérieure et la partie inférieure de chacun des centreurs.

La section 32, dite section de compensation hydraulique, est du type connu dans lequel le fluide des circuits hydrauliques de l'appareil de fond 10 est soumis à la pression du milieu environnant M, à savoir la pression hydrostatique du puits, de manière à éviter des pressions différentielles trop élevées sur les parties sensibles de la sonde, telles que les transducteurs.

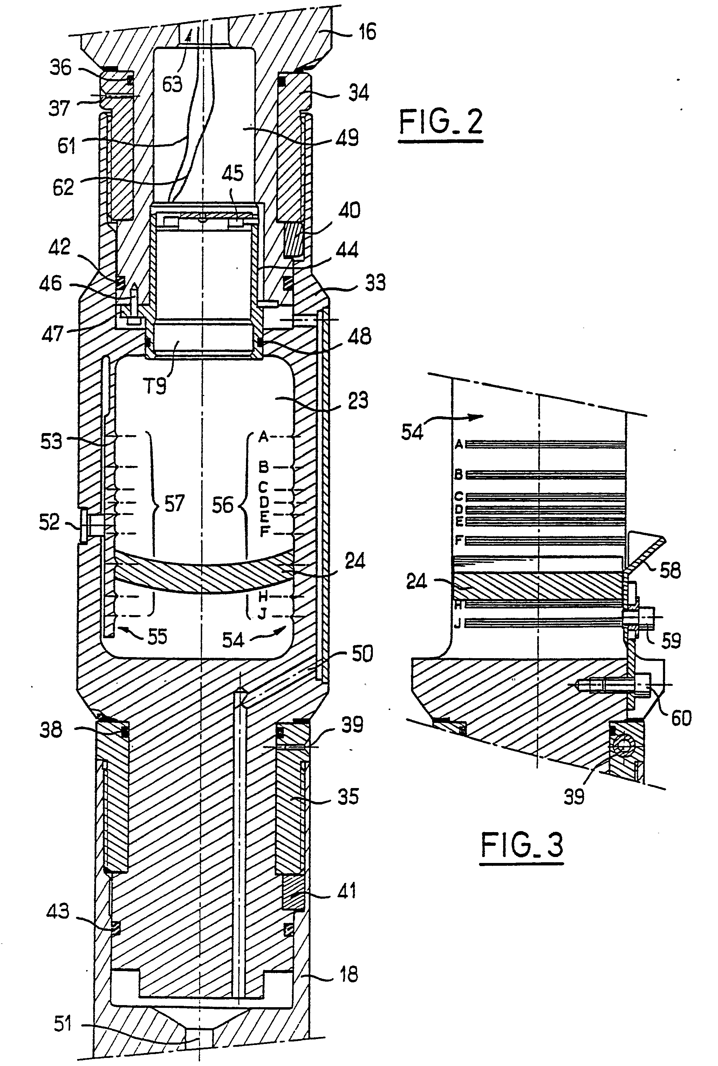

La section 22, dite section de compensation acoustique, présente un évidement 23 ouvert au fluide M en présence. Un neuvième transducteur T9, dit transducteur de référence et similaire aux transducteurs T1 à T8, émet des ondes acoustiques à travers l'évidement 23 selon un axe sensiblement confondu avec l'axe de la sonde 16 vers un réflecteur 24 placé dans l'évidement 23. Le réflecteur 24, sensiblement perpendiculaire à l'axe d'émission du transducteur T9, simule un secteur radial du tubage 14 étudié (voir les figures 1 et 2).

Chaque transducteur Tn (T1 à T9) est commandé pour émettre des impulsions acoustiques de faible durée dont le spectre couvre la plage de fréquence située entre 300 KHz et 600 KHz, la fréquence moyenne étant d'environ 500 KHz. La direction d'émission des transducteurs T1 à T8 est radiale, tandis que celle de T9 est longitudinale. Chaque impulsion émise est réfléchie par les différents interfaces qu'elle rencontre, à savoir le tubage 14 pour T1 à T8 et le réflecteur 24 pour T9, donnant ainsi un signal d'écho détecté par le même transducteur. Les signaux détectés sont transmis, par un câblage approprié (non représenté) traversant le centreur 17, à la section électronique 19, dans laquelle ils sont échantillonnés à cadence choisie, mis sous forme numérique, puis multiplexés et finalement transmis en surface par un MODEM (non représenté) connecté aux conducteurs du câble 12.

En surface, les conducteurs du câble 12 sont reliés à un système d'acquisition 25 comprenant un MODEM pour décoder les informations transmises et un démultiplexeur. Les signaux sont ensuite mémorisés dans une mémoire 26. Cette dernière est connectée à un calculateur 27 susceptible d'effectuer une suite d'étapes de traitement à chaque niveau de profondeur. Ces étapes seront développées ultérieurement. Les signaux représentatifs de la profondeur de l'appareil 10 sont engendrés par un détecteur de déplacement comprenant un générateur d'impulsions 28 commandé par une roue 29 en appui tangentiel sur le câble 12. Le générateur d'impulsions 28 délivre une impulsion chaque fois que le câble 12 s'est déplacé d'une unité de longueur.

Le traitement du calculateur 27 fournit un premier ensemble de signaux de sortie à un enregistreur magnétique 30 qui les enregistre sous forme numérique, niveau par niveau, sur une bande magnétique. Cet enregistrement magnétique contient notamment les signaux délivrés par les transducteurs T1 à T9 et permet, par conséquent, un traitement ultérieur des données. Le calculateur 27 fournit aussi, pour chaque niveau, un second ensemble de signaux de sortie à un enregistreur optique 31 qui réalise sur un film un enregistrement graphique, par exemple du type décrit dans le brevet français 80.20890 (No. de publication 2 491 123).

En référence à la figure 2, la section de compensation acoustique 22 comprend un corps 33, relié à sa partie supérieure à la sonde 16 et à sa partie inférieure au centreur 18. La liaison supérieure et la liaison inférieure sont assurées respectivement par les écrous 34 et 35, chacun des écrous étant formé de deux

4

demi bagues (non représentées) pour des raisons de montage. L'écrou 34 est monté libre en rotation sur une gorge de la sonde 16, la surface de friction entre les deux pièces étant isolée du fluide M par un joint torique 36 et lubrifiée à travers un graisseur 37. De même, l'écrou 35 est monté libre en rotation sur une gorge du corps 33, la surface de friction entre les deux pièces étant isolée du fluide extérieur par un joint torique 38 et lubrifiée à travers un graisseur 39. Une clavette d'alignement 40 est prévue de manière à empêcher la rotation du corps 33 par rapport à la sonde 16. Une seconde clavette 41 empêche la rotation du corps 33 par rapport au centreur 18. L'étanchéité entre la sonde 16 et le corps 33, et le corps 33 et le centreur 18, est assurée respectivement par les joints toriques 42 et 43.

Le transducteur de référence T9 est fixé dans son logement 44 par l'intermédiaire d'une goupille 45. Deux conducteurs électriques 61, 62 placés dans le conduit hydraulique 63 de la sonde 16 relient le transducteur T9 à la section électronique 19. Le logement 44, situé dans la chambre 49 de la sonde 16, est maintenu sur la face extrême de la sonde 16 par l'intermédiaire de trois vis semblables 46 à travers trois pattes 47 de fixation à 120°. L'étanchéité entre le corps 33 et le logement 44 est assurée par le joint torique 48. La chambre 49 est remplie de fluide hydraulique et communique avec le conduit 51 du centreur 18 par l'intermédiaire du conduit 50 du corps 33.

Le corps 33 présente un évidement 23 ouvert au fluide M extérieur à la sonde. Chacune des deux faces opposées (54, 55) de l'évidement 23 comportent un jeu de glissières (56, 57) parallèles entre elles et perpendiculaires à l'axe de la section 33 ; celles-ci, au nombre de neuf dans le mode de réalisation décrit, servent au positionnement du réflecteur 24 sélectionné. Cette sélection se fait en fonction du diamètre du tubage à étudier et de son épaisseur. Chacune des glissières correspond à un diamètre nominal donné de tubage. Le tableau qui suit, donne un exemple illustratif mais non limitatif, des correspondances entre chacune des glissières et chacun des diamètres de tubage ordinairement utilisé dans l'industrie pétrolière.

| Glissière | Diamètre du tubage | |
|---|---|---|
| | (en pouces) | (mm) |
| A | 4 1/2 | 114 |
| B | 5 | 127 |
| C | 5 1/2 | 140 |
| D | 6 5/8 | 168 |
| E | 7 | 178 |
| F | 7 5/8 | 194 |
| G | 8 5/8 | 219 |
| H | 9 5/8 | 244 |
| J | 10 3/4 | 273 |

A chacune de ces glissières correspondent donc une série de réflecteurs 24 possibles présentant une même courbure, à savoir celle du tubage à étudier, et des épaisseurs différentes entre eux. La forme des réflecteurs correspond à une section de cylindre du tubage étudié. Par exemple, pour la glissière E, il existe 8 différents réflecteurs ayant tous la même courbure, à savoir celle du tubage de 178 mm, et présentant chacun une épaisseur respectivement égale à l'épaisseur des huit différents tubages de 178 mm de diamètre ordinairement rencontrés dans l'industrie pétrolière.

Tubage de 178 mm de diamètre

| Poids du tubage par unité de longueur | | Epaisseur du tubage ou du réflecteur |
|---|---|---|
| (lb/ft) | (kg/m) | (mm) |
| 17 | 25,3 | 5,87 |
| 20 | 29,8 | 6,91 |
| 23 | 34,2 | 8,05 |
| 26 | 38,7 | 9,19 |
| 29 | 43,2 | 10,36 |
| 32 | 47,6 | 11,51 |
| 35 | 52,1 | 12,65 |
| 38 | 56,6 | 13,72 |

Pour couvrir toute la gamme de tubages rencontrés, le nombre total des différents réflecteurs est d'environ cinquante. Les réflecteurs sont constitués d'un matériau présentant des caractéristiques acoustiques similaires à celles du tubage ; le présent mode de réalisation fait usage d'acier inoxydable.

Le réflecteur 24 est muni de deux rainures latérales qui permettent l'introduction et le positionnement du réflecteur dans la glissière correspondante. Une fois positionné, le réflecteur 24 est verrouillé en place par l'intermédiaire d'une vis 52 venant en appui sur la lame 53 qui présente une certaine élasticité.

Il sera apprécié que de nombreuses variantes sont possibles en ce qui concerne le mode de positionnement et/ou de fixation du réflecteur 24.

En référence à la figure 3, la section 32 de compensation acoustique est pourvue d'un déflecteur 58 dont l'objectif est de canaliser une partie du fluide sur la surface avant du réflecteur 24, de sorte que le fluide présent entre le transducteur de référence T9 et le réflecteur 24 soit renouvelé en permanence lors du déplacement de l'appareil de fond 10. Cette circulation de fluide empêche par conséquent l'agglomération de débris à l'intérieur de l'évidement 23 et la formation d'un dépôt de matériau solide sur la surface du réflecteur 24, ce qui altèrerait les informations extraites du signal acoustique de référence ainsi obtenu ; en outre, elle assure l'homogénéité des caractéristiques du fluide.

Le déflecteur 58 est fixé par l'intermédiaire de deux vis (59, 60). Il est ajustable de manière à occuper une position optimale quelque soit la glissière utilisée.

Les glissières sont agencées de manière à ce que la distance entre la face avant du transducteur de référence T9 et la face arrière du réflecteur 24 varie dans une plage optimale située entre 50 mm pour la glissière A et 115 mm pour la glissière J. En effet, pour une distance inférieure à 50 mm, le signal détecté risque d'être altéré par les réflexions multiples entre la face du transducteur et la face réflectrice ; en revanche, pour une distance supérieure à 120 mm, l'onde acoustique recueillie est fortement atténuée par le fluide M circulant dans le puits.

Cette contrainte géométrique s'applique également aux transducteurs radiaux T1 à T8. Pour que la sonde 16 puisse effectuer des mesures satisfaisantes dans une gamme étendue de diamètre de tubage, il est prévu un réglage de la position radiale de chacun des transducteurs T1 à T8. Un tel réglage se fait d'une manière classique, à l'aide d'un système vis-écrou qui assure la translation radiale du boîtier contenant le transducteur de mesure en question.

Dès lors que les caractéristiques nominales du tubage à analyser sont connues, il suffit de sélectionner le réflecteur de référence correspondant et de le placer dans la glissière correspondante.

Il a été décrit un dispositif dans lequel la distance du réflecteur de référence 24 au transducteur de référence T9 est réglable par déplacement du réflecteur 24 ; bien entendu, ce réglage peut également être réalisé par translation du transducteur de référence T9.

Dans un mode de réalisation préférentiel, la position radiale des transducteurs T1 à T8 est ajustée de façon à ce que la distance entre la face avant de chacun des transducteurs T1 à T8 et la paroi extérieure du tubage 14 soit égale à la distance entre la face avant du transducteur de référence T9 et la face arrière du réflecteur de référence 24. Une telle configuration représente une simulation optimale du tubage à l'aide du réflecteur de référence.

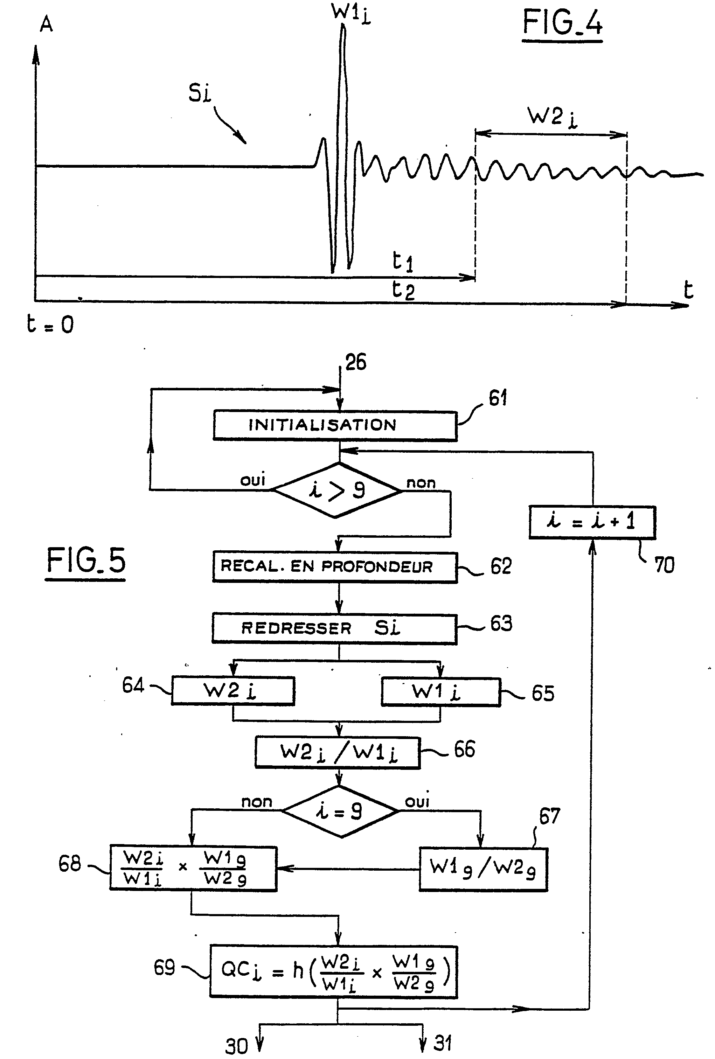

La figure 4 montre les variations d'amplitude d'un signal Si en fonction du temps, tel que recueilli par un transducteur Ti. D'après la demande de brevet français No. 78 20515 évoquée préalablement, il est connu de produire un signal $QC_i$ représentatif de la qualité de la liaison du ciment avec le tubage à partir de l'énergie $W2_i$ mesurée dans un segment de réverbération du signal de réflexion Si, le segment étant sensiblement représentatif des réflexions acoustiques entre les parois du tubage. Par exemple, la valeur de l'énergie $W2_i$ peut être obtenue après avoir redressé le signal Si, puis intégré le signal redressé durant un intervalle de temps t2-t1, les temps t1 et t2 ayant pour origine le moment d'émission de l'onde acoustique. Il est bien évident que d'autres méthodes permettent d'obtenir une valeur de $W2$ à partir du signal Si et que celles-ci sont à la portée de l'homme de l'art. L'on peut donc écrire :

$$QC_i = f(W2_i) \quad \text{avec} \quad i = 1 \text{ à } 8 \tag{I}$$

L'objet de l'invention étant d'éliminer les effets dûs à l'environnement et mentionnés précédemment, on normalise l'énergie mesurée $W2_i$ par rapport à l'énergie correspondante $W2_9$ du signal S9 recueilli par le transducteur de référence T9. Une telle normalisation a pour effet de supprimer les facteurs variables dûs à l'environnement, notamment les conditions de température, pression et densité du milieu M, ainsi que la géométrie du tubage étudié. L'équation (I) peut donc se mettre sous la forme suivante :

$$QC_i = g(W2_i/W2_9) \quad \text{avec} \quad i = 1 \text{ à } 8 \tag{II}$$

dans laquelle $W2_9$ est l'énergie mesurée durant le même intervalle de temps t2-t1 du signal S9.

Dans un mode de réalisation préférentiel, l'on peut être amené à tenir compte de la sensibilité de chacun des transducteurs et, par conséquent, à considérer le rapport $W2_i/W1_i$, dans lequel $W1_i$ représente l'énergie d'un premier segment correspondant au premier pic ou du pic maximum du signal recueilli Si. L'équation (II) devient alors :

$$QC_i = h\left(\frac{W2_i}{W1_i} \times \frac{W1_9}{W2_9}\right) \qquad \text{(III)}$$

Les fonctions g et h découlent d'une manière simple de la fonction f ; cette dernière est empirique et dépend principalement de deux paramètres qui peuvent aisément être déterminés. Le premier, à savoir l'impédance acoustique de la boue, est le produit de son poids volumique par la vitesse de propagation de l'onde acoustique à travers le milieu M qui est mesurée à partir du signal S9 ; le second paramètre, à savoir l'épaisseur nominale du tubage, est connu par définition.

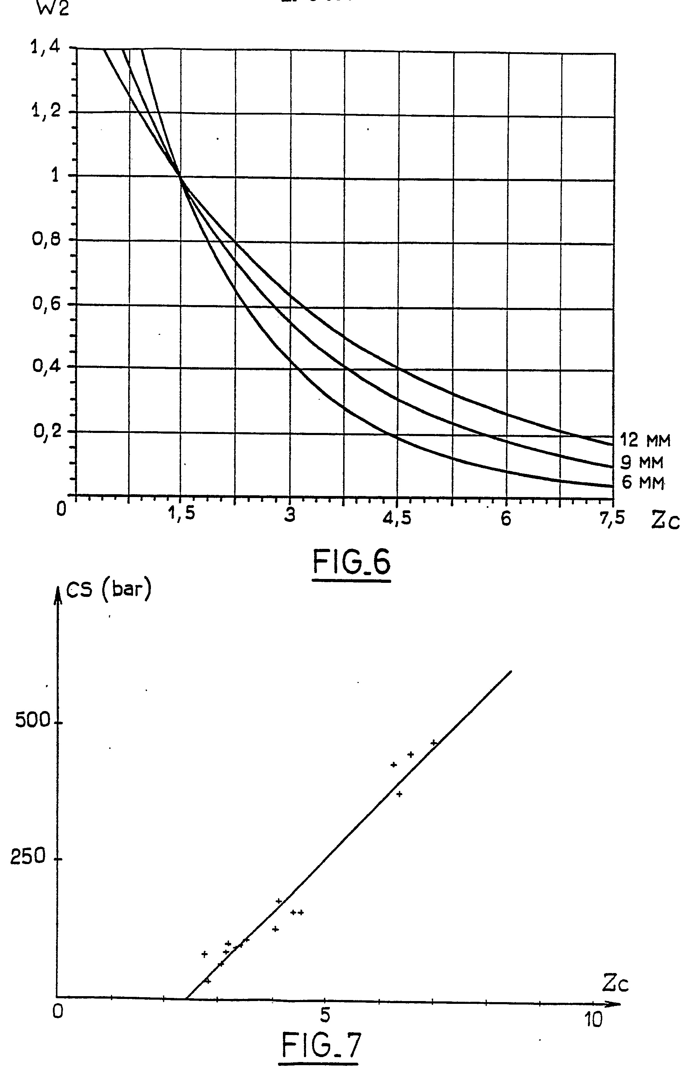

Les figures 6 et 7 illustrent, à titre d'exemple non limitatif, la relation f dans le cas où le signal QCi est assimilé comme étant la résistance à la compression du ciment CS disposé derrière le tubage. La figure 6 illustre notamment la fonction reliant l'énergie W2 à l'impédance acoustique du ciment Zc placé derrière le tubage, et ce en fonction de l'épaisseur du tubage (6, 9 et 12 mm). La figure 7 établit la relation entre l'impédance acoustique Zc et la résistance à la compression du ciment CS qui dans le cas présent est égale à QCi.

La figure 5 schématise l'organigramme du traitement de correction ou de normalisation effectué par le calculateur 27. A la sortie de la mémoire 26, les signaux Si sont dirigés vers le calculateur 27 dans lequel le traitement est tout d'abord initialisé par l'étape 61. Chaque signal Si (avec $0<i<10$) est recalé en profondeur (bloc 62), puis redressé (bloc 63). Le signal redressé est intégré (blocs 64 et 65) durant deux fenêtres temporelles pour produire respectivement les signaux $W2_i$ et $W1_i$. A partir des signaux obtenus, l'on établit le rapport $W2_i/W1_i$ (bloc 66). Pour l'indice $i = 9$ correspondant au signal du transducteur de référence, la valeur $W1_9/W2_9$ est placée dans une mémoire tampon (bloc 67) qui est remise à jour à chaque cycle, de façon à former pour chaque indice $i<9$ le rapport $W2_i \cdot W1_9/W1_i \cdot W2_9$ (bloc 68). A partir de ce dernier rapport, la valeur $QC_i$ est calculée (bloc 69) suivant la fonction h de l'équation (III). Les valeurs $QC_i$ sont ensuite dirigées vers les systèmes d'enregistrement magnétique (30) et optique (31), tandis que l'indice i est incrémenté (bloc 70) de manière à couvrir un cycle complet. Une fois le cycle complet terminé, le traitement est initialisé à nouveau.

Une variante du mode de réalisation décrit ci-dessus et dans lequel le traitement s'effectue dans le calculateur de surface, consiste à traiter partie du signal Si ou tout le signal Si dans un micro-processeur prévu à cet effet et situé dans la cartouche électronique 19. Il est également possible, grâce à l'enregistrement des signaux Si, d'effectuer des traitements ultérieurs dans un centre de calcul.

Il est bien entendu qu'il existe maintes autres façons de mettre en place un facteur de correction à partir d'un tel signal de référence S9. En particulier, il est aisé d'imaginer un facteur de correction dans lequel interviendraient plus de deux fenêtres de mesure pour chacun des signaux Si.

L'on peut également envisager un facteur de correction dans lequel l'on ferait intervenir des mesures d'amplitude à la place des mesures d'énergie. En effet, l'on sait que l'amplitude du premier pic de l'écho recueilli est directement liée à la rugosité de la paroi intérieure du tubage et à l'atténuation subie dans le milieu de propagation. Le procédé de correction selon l'invention permet donc, dans cette application, d'éliminer le facteur dû à l'atténuation subie à travers le milieu de propagation et, par conséquent, d'évaluer la rugosité de la paroi intérieure du tubage et son degré de corrosion, et ce quelque soit la plage de fréquence de l'impulsion acoustique.

Une autre application de l'invention consiste à corriger in situ la fonction reliant l'épaisseur du tubage et sa fréquence de résonance. Cette fonction a été décrite dans la demande de brevet française No. 78 20515 évoquée précédemment. Le procédé de correction de l'invention permet de corriger la relation existant entre l'épaisseur du réflecteur de référence 24 qui est connue très précisément et sa fréquence de résonance qui est extraite du signal S9. Cette relation corrigée permet donc de déterminer, avec une grande précision, l'épaisseur réelle du tubage au regard de chaque transducteur radial Ti en fonction de la fréquence de résonance du signal Si correspondant.

Le procédé de correction et/ou de normalisation décrit dans le cadre de la présente invention peut également servir à vérifier et/ou remplacer avantageusement une autre technique de normalisation, en particulier celle du type linéaire qui a été décrite dans la demande de brevet français No. 84.13220 déposée le 24 août 1984 au nom de la demanderesse.

**Revendications**

1. Procédé pour l'inspection acoustique d'un sondage muni d'un tubage et traversant des formations terrestres, dans lequel on forme un ou plusieurs signaux représentatifs respectivement d'une ou plusieurs informations relatives audit tubage et aux matériaux qui l'environnent, à partir d'un premier signal acoustique de réflexion obtenu suite à l'envoi, à travers le fluide présent à l'intérieur du tubage, d'une première impulsion acoustique dirigée, suivant une incidence sensiblement normale, vers un secteur de la paroi du tubage, caractérisé en ce qu'il consiste en outre à corriger le premier signal acoustique à l'aide d'un second signal acoustique de réflexion obtenu suite à l'envoi, à travers le même fluide présent à l'intérieur du tubage, d'une seconde impulsion acoustique dirigée, suivant une incidence sensiblement normale, vers un réflecteur de référence présentant des caractéristiques nominales sensiblement similaires à celles dudit tubage.

2. Procédé selon la revendication 1, caractérisé en ce qu'il inclue les étapes suivantes :

EP 0 176 408 B1

— depuis une première zone baignant dans le fluide à l'intérieur du tubage :
on émet au moins une première impulsion dirigée vers la paroi intérieure du tubage ;
on y recueille un premier signal acoustique de réflexion correspondant ;
— on extrait d'au moins une partie choisie dudit premier signal acoustique de réflexion, une première série de signaux relatifs audit tubage et aux matériaux qui l'environnent.

3. Procédé selon la revendication 2, caractérisé en ce que l'étape de corriger le premier signal acoustique de réflexion à l'aide du second signal acoustique de réflexion inclue les étapes suivantes :
— depuis un second endroit proche du premier et baignant également dans le fluide présent à l'intérieur du tubage :
on émet une seconde impulsion acoustique de même nature que la première vers ledit réflecteur de référence, les deux faces de ce dernier baignant dans ledit fluide ;
on y recueille un second signal acoustique de réflexion correspondant ;
— on extrait d'au moins une partie choisie dudit second signal acoustique de réflexion, de même manière que pour le premier signal, une seconde série de signaux relatifs audit réflecteur de référence ;
— on combine la première série de signaux avec la deuxième série de signaux de manière à obtenir une première série de signaux corrigés ; et
— on forme, à partir de cette première série de signaux corrigés, un ou plusieurs signaux représentatifs respectivement d'une ou plusieurs informations relatives audit tubage et aux matériaux qui l'environnent.

4. Procédé selon la revendication 3, caractérisé en outre par le fait que lesdits premier et second endroits sont sensiblement à la même distance du tubage et du réflecteur de référence, respectivement.

5. Procédé selon l'une des revendications précédentes, caractérisé par le fait que le réflecteur de référence présente une courbure sensiblement identique à celle du tubage étudié.

6. Procédé selon l'une des revendications précédentes, caractérisé par le fait que l'épaisseur du réflecteur de référence est sensiblement identique à celle du tubage étudié.

7. Procédé selon la revendication 3, caractérisé par le fait que l'étape de combiner la première série de signaux avec la seconde série de signaux inclue l'étape de faire le rapport d'une grandeur du signal, respectivement mesurée dans une ou plusieurs fenêtres d'un des deux signaux acoustiques de réflexion, à la même grandeur respectivement mesurée dans les fenêtres correspondantes de l'autre des deux signaux acoustiques de réflexion.

8. Procédé selon la revendication 7, caractérisé par le fait que ladite grandeur correspond à l'énergie du signal de réflexion mesurée dans ladite fenêtre.

9. procédé selon l'une des revendications précédentes, caractérisé par le fait que la fréquence desdites première et seconde impulsions acoustiques est présélectionnée de façon à faire apparaître une résonance d'épaisseur entre les parois dudit tubage et entre celles dudit réflecteur de référence, et que lesdits informations relatives audit tubage et aux matériaux qui l'environnent, incluent la qualité de la liaison entre le tubage et la couche de ciment disposée derrière ce dernier.

10. Procédé selon la revendication 9, caractérisé par le fait que ledit réflecteur de référence représente un secteur de tubage non cimenté.

11. Procédé selon la revendication 7, caractérisé par le fait que ladite grandeur correspond à l'amplitude du signal de réflexion dans ladite fenêtre.

12. Procédé selon la revendication 11, caractérisé par le fait que lesdits informations relatives audit tubage incluent la rugosité de la paroi intérieure dudit tubage.

13. Procédé selon l'une des revendications 1 à 6, caractérisé par le fait que lesdits informations relatives audit tubage incluent l'épaisseur dudit tubage à l'endroit de la mesure.

14. Dispositif pour l'inspection acoustique d'un sondage, muni d'un tubage et traversant des formations terrestres, comprenant :
— une sonde adaptée à être déplacée dans le tubage et équipée d'au moins un transducteur acoustique de mesure capable d'émettre une première impulsion acoustique dirigée vers au moins un secteur radial dudit tubage et de détecter un premier signal acoustique de réflexion ;
— des moyens pour former un ou plusieurs signaux représentatifs respectivement d'une ou plusieurs informations relatives audit tubage et aux matériaux qui l'environnent, à partir dudit premier signal acoustique de réflexion ; et par ailleurs
— d'un transducteur acoustique de référence capable d'émettre une seconde impulsion acoustique dirigée vers une surface réflectrice de référence et de détecter un second signal acoustique de réflexion ; caractérisé par le fait qu'il comprend en outre des moyens pour corriger le premier signal acoustique de réflexion à l'aide du second signal acoustique de réflexion, ladite surface réflectrice de référence étant formée par un réflecteur de référence dont les caractéristiques nominales sont sensiblement similaires à celles d'un secteur du tubage étudié..

15. Dispositif selon la revendication 14, caractérisé par le fait que les deux faces du réflecteur de référence baignent dans le fluide présent à l'intérieur du tubage.

16. Dispositif selon l'une des revendications 14 ou 15, caractérisé en outre par le fait que la distance entre la face avant de chacun des transducteurs de mesure et la paroi extérieure du tubage est sensiblement égale à la distance entre la face avant du transducteur de référence et la face arrière dudit réflecteur de référence.

8

17. Dispositif selon l'une des revendications 14 à 16, caractérisé par le fait que ledit réflecteur de référence présente une courbure sensiblement identique à celle du tubage étudié.

18. Dispositif selon l'une des revendications 14 à 17, caractérisé par le fait que ledit réflecteur de référence présente une épaisseur sensiblement identique à celle du tubage étudié.

19. Dispositif selon l'une des revendications 14 à 18, caractérisé par le fait que lesdits moyens pour corriger ledit premier signal acoustique de réflexion incluent des moyens pour faire le rapport d'une grandeur du signal, respectivement mesurée dans une ou plusieurs fenêtres d'un des deux signaux acoustiques de réflexion, à la même grandeur respectivement mesurée dans les fenêtres correspondantes de l'autre des deux signaux acoustiques de réflexion.

20. Dispositif selon l'une des revendications 14 à 19, caractérisé par le fait que lesdites informations relatives audit tubage et aux matériaux qui l'environnent, incluent la qualité de la liaison entre le tubage et la couche de ciment disposée derrière ce dernier.

21. Dispositif selon la revendication 20, caractérisé par le fait que ledit réflecteur de référence représente un secteur de tubage non cimenté.

22. Dispositif selon l'une des revendications 14 à 16, caractérisé par le fait que lesdites informations relatives audit tubage incluent la rugosité de la paroi intérieure dudit tubage.

23. Dispositif selon l'une des revendications 14 à 16, caractérisé par le fait que lesdites informations relatives audit tubage incluent l'épaisseur dudit tubage.

**Claims**

1. A method for the acoustic inspection of a borehole fitted with a casing and passing through ground formations, in which one or more signals are formed representative respectively of one or more data items relating to said casing and to the materials surrounding it on the basis of a first reflected acoustic signal obtained after sending, through the fluid present inside the casing, a first acoustic pulse directed at a substantially normal incidence towards a sector of the wall of the casing, characterized in that the method further consists in correcting the first acoustic signal by means of a second reflected acoustic signal obtained after sending, through the same fluid present inside the casing, a second acoustic pulse directed at a substantially normal incidence towards a reference reflector having nominal characteristics substantially similar to those of said casing.

2. A method according to claim 1, characterized in that it includes the following steps :
— from a first zone immersed in the fluid inside the casing :
emitting at least one first pulse directed to the inside wall of the casing ;
picking up a corresponding first reflected acoustic signal ;
— extracting from at least a selected portion of said first reflected acoustic signal, a first series of signals relating to said casing and to the materials surrounding it.

3. A method according to claim 2, characterized in that the step of correcting the first reflected acoustic signal by means of the second reflected acoustic signal includes the following steps :
— from a second location close to the first and likewise immersed in the fluid present inside the casing :
emitting a second acoustic pulse of the same nature as the first towards said reference reflector, both faces of the reference reflector being immersed in said fluid ;
picking up a corresponding second reflected acoustic signal ;
— extracting, from at least a chosen portion of said second reflected acoustic signal and in the same manner as for the first signal, at least one second series of signals relating to said reference reflector ;
— combining the first series of signals with the second series of signals to obtain a first series of corrected signals ; and
— forming, from said first series of corrected signals, one or more signals representative respectively of one or more data items relating to said casing and to the materials surrounding it.

4. A method according to claim 3, further characterized by the fact that said first and second locations are substantially at the same distance from the casing and from the reference reflector, respectively.

5. A method according to any preceding claim, characterized by the fact that the reference reflector has substantially identical curvature to the curvature of the casing being studied.

6. A method according to any preceding claim, characterized by the fact that the thickness of the reference reflector is substantially identical to the thickness of the casing being studied.

7. A method according to claim 3, characterized by the fact that the step of combining the first series of signals with the second series of signals includes the step of establishing the ratio between a magnitude of the signal respectively measured in one or more windows of one of the two reflected acoustic signals with the same magnitude respectively measured in the corresponding windows of the other of the two reflected acoustic signals.

8. A method according to claim 7, characterized by the fact that said magnitude corresponds to the energy of the reflected signal measured in said window.

9. A method according to any preceding claim, characterized by the fact that the frequency of said first and second acoustic pulses is preselected so as to cause thickness resonance to appear between the walls of said casing and between the walls of said reference reflector, and that said data items relating to said casing and to the material surrounding it include the quality of the bonding between the casing and the layer of cement disposed behind the casing.

10. A method according to claim 9, characterized by the fact that said reference reflector represents a sector of uncemented casing.

11. A method according to claim 7, characterized by the fact that said magnitude corresponds to the amplitude of the reflected signal in the window.

12. A method according to claim 11, characterized by the fact that said data items relating to said casing include the roughness of the inside wall of said casing.

13. A method according to any one of claims 1 to 6, characterized by the fact that said data items relating to said casing include the thickness of said casing at the point where the measurement is made.

14. Apparatus for the acoustic inspection of a borehole fitted with a casing and passing through ground formations, the apparatus comprising :
— a sonde adapted to be displaced in the casing and equipped with at least one acoustic measuring transducer capable of emitting a first acoustic pulse directed to at least one radial sector of said casing and of detecting a first reflected acoustic signal ;
— means for forming one or more signals representative respectively of one or more data items relating to said casing and to the materials surrounding it on the basis of said first reflected acoustic signal ; and additionally
— a reference acoustic transducer capable of emitting a second acoustic pulse directed towards a reference reflecting surface and of detecting a second reflected acoustic signal ;
characterized by the fact that the apparatus further comprises means for correcting the first reflected acoustic signal by means of the second reflected acoustic signal, said reference reflecting surface being formed by a reference reflector whose nominal characteristics are substantially similar to those of a sector of the casing being studied.

15. Apparatus according to claim 14, characterized by the fact that the two faces of the reference reflector are immersed in the fluid present inside the casing.

16. Apparatus according to claim 14 or 15, further characterized by the fact that the distance between the front face of each of the measuring transducers and the outside wall of the casing is substantially equal to the distance between the front face of the reference transducer and the rear face of said reference reflector.

17. Apparatus according to any one of claims 14 to 16, characterized by the fact that said reference reflector has substantially identical curvature to the curvature of the casing being studied.

18. Apparatus according to any one of claims 14 to 17, characterized by the fact that said reference reflector has substantially identical thickness to the thickness of the casing being studied.

19. Apparatus according to any one of claims 14 to 18, characterized by the fact that said means for correcting said first reflected acoustic signal include means for establishing the ratio of a magnitude of the signal respectively measured in one or more windows of the two reflected acoustic signals divided by the same magnitude respectively measured in the corresponding window of the other of the two reflected acoustic signals.

20. Apparatus according to any one of claims 14 to 19, characterized by the fact that said data items relating to said casing and to the materials which surround it include the quality of the bonding between the casin and the layer of cement disposed there behind.

21. Apparatus according to claim 20, characterized by the fact that said reference reflector represents a sector of non-cemented casing.

22. Apparatus according to any one of claims 14 to 16, characterized by the fact that said data items relating to said casing include the roughness of the inside surface of said casing.

23. Apparatus according to any one of claims 14 to 16 characterized by the fact that said data items relating to said casing include the thickness of said casing.

**Patentansprüche**

1. Verfahren zur akustischen Untersuchung einer mit einer Verrohrung versehenen und Erdformationen durchteufenden Bohrung, bei dem man ein oder mehrere Signale bildet, die repräsentativ sind für eine oder mehrere Informationen bezüglich der Verrohrung bzw. der sie umgebenden Materialien, ausgehend von einem ersten akustischen Reflexionssignal, erhalten nach der Aussendung quer durch das im Inneren der Verrohrung vorhandene Fluid eines ersten gerichteten akustischen Impulses, der einem im wesentlichen normalen Auftreffen folgt, in Richtung eines Sektors der Verrohrungswandung, dadurch gekennzeichnet, daß das Verfahren ferner darin besteht, das erste akustische Signal zu korrigieren mit Hilfe eines zweiten akustischen Reflexionssignals, das manerhält nach Aussendung quer durch dasselbe im Inneren der Verrohrung vorhandene Fluid eines zweiten gerichteten akustischen Impulses gemäß einem im wesentlichen normalen Auftreffen in Richtung eines Referenzreflektors, der nominal im wesentlichen ähnliche Charakteristiken aufweist wie diejenigen der genannten Verrohrung.

2. Verfahren nach Anspruch 1, dadurch gekennzeichnet, daß es die folgenden Schritte umfaßt :
— ausgehend von einer ersten in dem Fluid im Inneren der Verrohrung schwimmenden Zone sendet man,
mindestens einen ersten, gegen die Innenwandung der Verrohrung gerichteten Impuls aus,
man empfängt dort ein erstes entsprechendes akustisches Reflexionssignal,
— man extrahiert aus mindestens einem ausgewählten Teil des genannten ersten akustischen Reflexionssignals eine erste Serie von Signalen bezüglich der Verrohrung und der Materialien, die sie umgeben.

3. Verfahren nach Anspruch 2, dadurch gekennzeichnet, daß der Schritt der Korrektur des ersten akustischen Reflexionssignals mit Hilfe des zweiten akustischen Reflexionssignals die folgenden Schritte umfaßt :
— ausgehend von einer zweiten nahe der ersten liegenden Stelle, die ebenfalls in dem im Inneren der Verrohrung vorhandenen Fluid schwimmt, sendet man,
einen zweiten akustischen Impuls derselben Natur wie der erste in Richtung auf den genannten Referenzreflektor, wobei die beiden Seiten dieses letzteren in dem genannten Fluid schwimmen,
man gewinnt daraus ein zweites entsprechendes akustisches Reflexionssignal,
— man extrahiert aus mindestens einem ausgewählten Teil des genannten zweiten akustischen Reflexionssignals in gleicher Weise wie für das erste Signal eine zweite Serie von Signalen bezüglich des genannten Referenzreflektors,
— man kombiniert die erste Serie von Signalen mit der zweiten Serie von Signalen derart, daß man eine erste Serie von korrigierten Signalen erhält und
— man bildet, ausgehend von dieser ersten Serie von korrigierten Signalen, ein oder mehrere Signale, die repräsentativ sind für eine oder mehrere Informationen bezüglich der genannten Verrohrung bzw. der sie umgebenden Materialien.

4. Verfahren nach Anspruch 3, gekennzeichnet ferner durch die Tatsache, daß die genannten ersten und zweiten Stellen im wesentlichen im gleichen Abstand von der Verrohrung bzw. vom Referenzreflektor sind.

5. Verfahren nach einem der vorangehenden Ansprüche, dadurch gekennzeichnet, daß der Referenzreflektor eine Krümmung aufweist, die im wesentlichen identisch derjenigen der untersuchten Verrohrung ist.

6. Verfahren nach einem der vorangehenden Ansprüche, dadurch gekennzeichnet, daß die Dicke des Referenzreflektors im wesentlichen identisch mit derjenigen der untersuchten Verrohrung ist.

7. Verfahren nach Anspruch 3, dadurch gekennzeichnet, daß der Schritt der Kombination der ersten Serie von Signalen mit der zweiten Serie von Signalen den Schritt umfaßt, das Verhältnis einer Größe des Signals, jeweils in einem oder mehreren Fenstern eines der beiden akustischen Referenzsignale gemessen, zu der gleichen Größe zu bilden, jeweils gemessen in entsprechenden Fenstern des anderen der beiden akustischen Reflexionssignale.

8. Verfahren nach Anspruch 7, dadurch gekennzeichnet, daß die genannte Größe der Energie des Reflexionssignals entspricht, gemessen in dem genannten Fenster.

9. Verfahren nach einem der vorangehenden Ansprüche, dadurch gekennzeichnet, daß die Frequenz des genannten ersten und des genannten zweiten akustischen Impulses derart vorgewählt ist, daß sie eine Dickenresonanz zwischen den Wandungen der genannten Verrohrung und jenen des genannten Referenzreflektors erscheinen läßt und daß die genannten Informationen bezüglich der genannten Verrohrung und der sie umgebenden Materialien die Qualität der Verbindung zwischen der Verrohrung und der Zementschicht umfassen, angeordnet hinter der Verrohrung.

10. Verfahren nach Anspruch 9, dadurch gekennzeichnet, daß der genannte Referenzreflektor einen nicht zementierten Verrohrungsabschnitt darstellt.

11. Verfahren nach Anspruch 7, dadurch gekennzeichnet, daß die genannte Größe der Amplitude des Reflexionssignals in dem genannten Fenster entspricht.

12. Vorrichtung nach Anspruch 11, dadurch gekennzeichnet, daß die genannten Informationen bezüglich der Verrohrung die Rauhigkeit der Innenwandung in der Verrohrung umfassen.

13. Vorrichtung nach einem der Ansprüche 1 bis 6, dadurch gekennzeichnet, daß die genannten Informationen bezüglich der Verrohrung die Dicke der Verrohrung an der Meßstelle umfassen.

14. Vorrichtung für die akustische Untersuchung eines Bohrlochs, das mit einer Verrohrung versehen ist und Erdformationen durchteuft, umfassend :
— eine in der Verrohrung verlagerbare und mit mindestens einem akustischen Meßumsetzer versehene Sonde, der in der Lage ist, einen ersten akustischen Impuls auszusenden, gerichtet gegen mindestens einen Radialsektor der Verrohrung und ein erstes akustisches Reflexionssignal zu empfangen,
— Mittel für das Bilden eines oder mehrerer Signale, die repräsentativ sind für eine bzw. mehrere Informationen bezüglich der Verrohrung und der sie umgebenden Materialien, ausgehend von dem genannten ersten akustischen Reflexionssignal und ferner
— einen akustischen Referenzumsetzer, der geeignet ist, einen zweiten akustischen Impuls auszusenden, gerichtet gegen eine reflektierende Referenzoberfläche, und ein zweites akustisches Referenzsignal zu empfangen,

dadurch gekennzeichnet, daß die Vorrichtung ferner Mittel umfaßt für das Korrigieren des ersten akustischen Reflexionssignals mit Hilfe des zweiten akustischen Reflexionssignals, wobei die genannte reflektierende Referenzoberfläche von einem Referenzreflektor gebildet wird, dessen Nominalkennwerte im wesentlichen ähnlich sind wie diejenigen des untersuchten Verrohrungsektors.

15. Vorrichtung nach Anspruch 14, dadurch gekennzeichnet, daß die beiden Seiten des Referenzreflektors in dem sich im Inneren der Verrohrung befindenden Fluid schwimmen.

16. Vorrichtung nach einem der Ansprüche 14 oder 15, dadurch gekennzeichnet, daß der Abstand zwischen der Vorderseite jedes der Meßumsetzer und der Außenwandung der Verrohrung im wesentlichen gleich ist dem Abstand zwischen der Vorderseite des Referenzumsetzers und der Rückseite des genannten Referenzreflektors.

17. Vorrichtung nach einem der Ansprüche 14 bis 16, dadurch gekennzeichnet, daß der Referenzreflektor eine Krümmung aufweist im wesentlichen identisch derjenigen der untersuchten Verrohrung.

18. Vorrichtung nach einem der Ansprüche 14 bis 17, dadurch gekennzeichnet, daß der Referenzreflektor eine Dicke besitzt, die im wesentlichen identisch derjenigen der untersuchten Verrohrung ist.

19. Vorrichtung nach einem der Ansprüche 14 bis 18, dadurch gekennzeichnet, daß die genannten Mittel zum Korrigieren des genannten ersten akustischen Referenzsignals Mittel umfassen zum Bilden des Verhältnisses einer Größe des Signals, jeweils gemessen in einem oder mehreren Fenstern eines der beiden akustischen Reflexionssignale zu derselben Größe, jeweils gemessen in entsprechenden Fenstern des anderen der beiden akustischen Reflexionssignale.

20. Vorrichtung nach einem der Ansprüche 14 bis 19, dadurch gekennzeichnet, daß die genannten Informationen bezüglich der Verrohrung der sie umgebenden Materialien die Qualität der Verbindung zwischen der Verrohrung und der hinter dieser angeordneten Zementschicht umfassen.

21. Vorrichtung nach Anspruch 20, dadurch gekennzeichnet, daß der genannte Referenzreflektor einen nicht zementierten Sektor der Verrohrung darstellt.

22. Vorrichtung nach einem der Ansprüche 14 bis 16, dadurch gekennzeichnet, daß die genannten Informationen bezüglich der Verrohrung die Rauhigkeit der Innenwandung der Verrohrung umfassen.

23. Vorrichtung nach einem der Ansprüche 14 bis 16, dadurch gekennzeichnet, daß die genannten Informationen bezüglich der Verrohrung die Dicke der genannten Verrohrung umfassen.

EP 0 176 408 B1

FIG_1

FIG. 2

FIG. 3

FIG.4

FIG.5

FIG.6

FIG.7

4